(19) Europäisches Patentamt
European Patent Office
Office européen des brevets

(11) **EP 4 235 507 A1**

(12) **EUROPEAN PATENT APPLICATION**

(43) Date of publication:
**30.08.2023   Bulletin 2023/35**

(21) Application number: **22158714.0**

(22) Date of filing: **25.02.2022**

(51) International Patent Classification (IPC):
**G06N 3/04** *(2023.01)*      **G06N 3/08** *(2023.01)*

(52) Cooperative Patent Classification (CPC):
**G06N 3/084; G06N 3/045; G06N 3/082**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Wu, Zhiliang**
**85579 Neubiberg (DE)**
• **Yang, Yinchong**
**85579 Neubiberg (DE)**

(74) Representative: **Siemens Patent Attorneys**
**Postfach 22 16 34**
**80506 München (DE)**

(54) **AUTOMATICALLY QUANTIFYING AN UNCERTAINTY OF A PREDICTION PROVIDED BY A TRAINED REGRESSION MODEL**

(57)     Computer-implemented method for automatically quantifying an uncertainty of a prediction provided by a trained regression model for measured sensor data or image data, comprising
- obtaining (S1) the trained regression model (f), training data (Xraw) which were applied to train the regression model, and an empirical variance (sig(f)) determined by the regression model (f) applying the training data as input data,
- generating (S2) an uncertainty layer in the trained regression model based on the training data, and the empirical variance,
- obtaining (S3) the measured sensor data or image data as input data,
- outputting (S4) a prediction by processing the input data in the trained regression model and outputting (S5) an uncertainty value of the prediction by processing the input data by a feature extractor model and subsequently by the uncertainty layer, wherein the feature extractor model comprises all but the last layers of the regression model.

FIG 1

**Description**

The present disclosure relates to an assistance apparatus and a method for automatically quantifying an uncertainty of a prediction provided by a trained regression model for measured sensor data or image data.

Deep neural networks, when applied to regression tasks, further in this document called regression model, are widely used for different purposes, e.g., condition monitoring of machines, quality control or a manufacturing process, object identification in autonomous driving systems, traffic control, healthcare support etc. Regression tasks are widely used for prediction and forecasting, and to infer causal relationships between the independent and dependent variables.

Condition monitoring: Sensors are omnipresent in all kinds of heavy machinery and equipment and, therefore, highly relevant for many different business fields. One application field of sensors is monitoring the functionality of heavy machinery such as pumps, turbines, die casting machines etc. or manufacturing machines or tools. To do so, sensors are installed on these machines and measure different physical conditions such as current, temperature, pressure which enables monitoring of the state of the system. If the machinery is subject to different damages, the sensor values typically show suspicious patterns and anomalies in the data which allow to train machine learning models for detecting these anomalies.

Product sorting / quality control: Sorting of items or identification of alien objects from various sensor data or image data is an important and frequent task industry and in healthcare. Here, the sensor-generated or image data is analysed to identify the type of incoming objects (e.g., classify by material, shape, colour, etc.) or to detect strange objects which could either cause contaminations in the end-product, to simply identify incorrectly produced goods or to predict unhealthy bone or tissue.

Traffic control: Identification and location of objects on a street or neighbouring environment from sensor or image data is used in traffic control systems to identify traffic volume or obstacles influencing traffic flow or individual mobile path guidance.

Deep neural networks modelled for regression tasks cannot express predictive uncertainty directly in contrast to classification tasks where the predicted probability can be interpreted as uncertainty and confidence. In safety critical domains, or in situations where imprecise prediction might result in high cost, the capability to communicate such uncertainty in its prediction could be a vital and differentiating feature of an AI system.

Up to now, one relies on specific design and training / test techniques to enable neural networks to express predictive uncertainty. Multiple neural networks could be train simultaneously with the same data set but with different initial weights. The result is an ensemble of regression models which can also produce an empirical predictive distribution. This method requires huge computation resources.

Therefore, it is the object of the present application to provide an automated service that can derive the predictive uncertainty from an already trained neural network for regression task in a resource efficient way.

This object is solved by the features of the independent claims. The dependent claims contain further developments of the invention.

A first aspect concerns a computer-implemented method for automatically quantifying an uncertainty of a prediction provided by a trained regression model for measured sensor data or image data, comprising the following steps:

- obtaining the trained regression model, training data which were applied to train the regression model, and an empirical variance determined by the regression model applying the training data as input data,
- generating an uncertainty layer in the trained regression model based on the training data, and the empirical variance,
- obtaining the measured sensor data or image data as input data, and
- outputting a prediction by processing the input data in the trained regression model, and outputting an uncertainty value of the prediction by processing the input data by a feature extractor model and subsequently by the uncertainty layer, wherein the feature extractor model comprises all but the last layers of the regression model.

The regression model refers to a deep neural network modeled to solve a regression task. The method does not undertake any adjustment on the neural network weights or architecture, but only adds one extra output head to the model. The solution requires only that a user of the trained regression model, e.g., an AI-control system, provides representative subsample or cluster centers of the training data and updates the trained regression model with the new version comprising the generated uncertainty layer. Thus, already active regression models established to control, monitor or analyze a machine, traffic or images in healthcare systems can be easily updated to provide an uncertainty value for the provided prediction or forecast.

In an embodiment the method the uncertainty layer is generated comprising the steps

a. splitting the regression model into a linear model comprising a last layer of the regression model, and the feature extractor model,
b. determining latent representations by applying the training data to the feature extractor model,

c. generating the uncertainty layer by combining the latent representations with the empirical variance.

The steps require few processing resources and do not change weights of the trained regression model. This ensures unchanged results of the regression model updated with the uncertainty layer compared to the obtained trained regression model.

According to a further embodiment the latent representations are combined with the empirical variance according to an Ordinary Least Square Model.

This approximation of the ordinary least square model reduced processing capacity and provides a good estimate of uncertainty values.

According to an alternative embodiment the latent representations are combined with the empirical variance as a Gaussian Process model with a linear kernel defined on the latent representations.

According to a further embodiment the training data is a subset of training data comprising less training data than the entire training dataset used to train the regression model.

This facilitates application of the method as the complete training dataset can comprise a huge amount of data which is hard to handle or not available in its completeness after training phase.

According to a further embodiment the subset of training data comprises uniformly distributed random samples of the training data.

Uniformly distributed random samples can be sampled in a fast and processing efficient way.

According to an alternative embodiment the subset of training data comprises data samples representing cluster centers of clusters resulting from a cluster analysis on the entire training dataset.

This subset of training data closely represents the entire set of training data, and subsequently result in higher quality of the uncertainty quantification compared to a subset of randomly sampled training data.

According to a further embodiment the uncertainty value of the prediction is a variance of the prediction.

According to a further embodiment the uncertainty layer comprises an uncertainty core element, which is calculated depending on the subset of training data during generation of the uncertainty layer and wherein the calculated uncertainty core element is reused during outputting an uncertainty value of the prediction for the measured sensor data or image data.

This saves processing capacity and time for providing the uncertainty value for each measured sample. Therefore, a short-term provision of uncertainty value for measured samples is possible.

According to a further embodiment the trained regression model is applied for condition monitoring or quality control or image recognition in a manufacturing process or in autonomous driving or in healthcare support.

The method provides especially in safety critical condition monitoring or quality control enhanced confidence in the applied regression model and can be applied in scenarios where an estimation on the uncertainty is required, e.g., as release requirement for the application of the regression model.

A second aspect concerns a computer program product directly loadable into the internal memory of a digital computer, comprising software code portions for performing the steps as described before, when said product is run on said digital computer.

The computer program product can be stored on a computer-readable storage medium comprising instructions which, when executed by a computer, cause the computer to carry out the steps as described before.

A third aspect concerns an assistance apparatus for automatically quantifying an uncertainty of a prediction provided by a trained regression model for measured sensor data or image data, comprising at least one processor, configured to perform the steps:

- obtaining the trained regression model, training data which were applied to train the regression model, and an empirical variance determined by the regression model applying the training data as input data,
- generating an uncertainty layer in the trained regression model based on the training data, and the empirical variance,
- obtaining the measured sensor data or image data as input data,
- outputting a prediction by processing the input data in the trained regression model, and outputting an uncertainty value of the prediction by processing the input data by a feature extractor model and subsequently by the uncertainty layer, wherein the feature extractor model comprises all but the last layers of the regression model.

The assistance apparatus outputs, when measured sensor data or image data are obtained as input data, not only a prediction, e.g., of the condition of a machine at which the sensor data are measured, but additionally the uncertainty value of the prediction. The uncertainty value provides a measure for how precise the prediction is. In safety critical domains, or in situations where imprecise prediction might result in high cost, the capability to communicate such uncertainty in its prediction could be a vital and differentiating feature of an AI system.

In an embodiment, the assistance apparatus is installed and/or deployed on a cloud or an edge device or a device or system to which sensors are deployed providing the measured sensor data or image data.

The assistance apparatus, when installed in the cloud, provides flexible and especially large processing capacity to generate the uncertainty layer. The assistance apparatus, when installed in the edge device, e.g., on site of a manufacturing floor, provides fast delivery of the prediction and uncertainty value due to short communication paths. It is also suited for release requirement in safety critical environments. The assistance apparatus, when installed in a device or system to which sensors are deployed providing the measured sensor data or image data is especially suitable for real-time surveyance of the device or system.

A fourth aspect concerns an uncertainty modelling apparatus, comprising at least one processor, configured to perform the steps:

- obtaining a trained regression model, training data which were applied to train the trained regression model, and an empirical variance determined by the regression model applying the training data as input data,
- generating an uncertainty layer in the trained regression model based on the training data, and the empirical variance, and
- outputting an enhanced trained regression model which comprises the trained regression model and the uncertainty layer.

The uncertainty modelling apparatus provides an automated service that can derive the predictive uncertainty as output from an already trained plain neural network received as input.

The uncertainty modelling apparatus can flexibly provide the uncertainty layer for various kind of trained regression models trained for different technical systems and providing predictions for different variables or parameters of a technical system.

In an embodiment of the uncertainty modelling apparatus the uncertainty layer is generated by the at least one processor by performing the steps

a. splitting the regression model into a linear model comprising a last layer of the regression model, and the feature extractor model,
b. determining latent representations by applying the training data to the feature extractor model, c. generating the uncertainty layer by combining the latent representations with the empirical variance.

The invention will be explained in more detail by reference to accompanying figures. Similar objects will be marked by the same reference signs.

Figure 1    shows an embodiment of the inventive method illustrated by a schematic information flow diagram.

Figure 2    shows an embodiment of a splitting step of the inventive in schematical form.

Figure 3    shows an embodiment of an enhanced trained regression model generated by the inventive method in schematical form.

Figure 4    schematically illustrates a first embodiment of an uncertainty layer of the inventive method.

Figure 5    schematically illustrates a second embodiment of the uncertainty layer of the inventive method.

Figure 6    schematically illustrates an embodiment of an inventive assistance apparatus configured to monitor a machine.

Figure 7    schematically illustrates an embodiment of an inventive uncertainty modelling apparatus.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor, firmware or by software, and/or by a combination of dedicated hardware and firmware and software. It is further noted that each functional unit described for an apparatus can perform a functional step of the related method.

Regression models, i.e., deep neural networks trained to perform a regression task, are widely used providing predictions or forecasts of a technical system for different purposes, e.g., condition monitoring of machines, quality control or a manufacturing process, object identification in autonomous driving systems, for traffic control or healthcare support. Training data Xraw sampled during one or different operation modes of the technical system are applied to a plain deep neural network resulting in a trained regression model f. The training data Xraw are, e.g., a set of sensor data measured at different operation modes of the technical system. The measured sensor data of the machine, manufacturing process autonomous driving system are representing, e.g., a temperature, pressure, velocity etc. Sensor data has to be understood to include also image data measured by an optical sensor or a camera. The trained regression model f outputs a prediction of, e.g., the actual operation mode of the technical system, when sensor data sampled at the technical system are input to the trained regression model f.

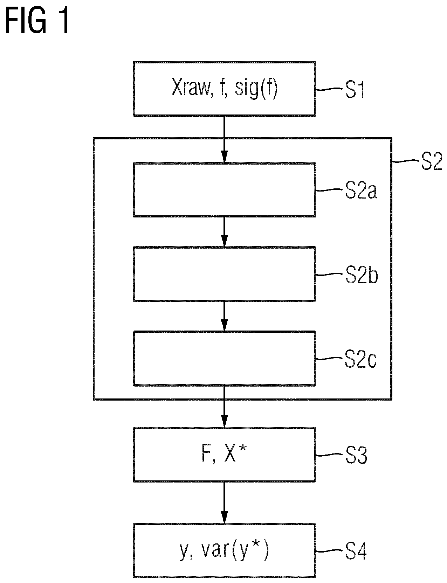

An uncertainty of the prediction is automatically quantified and output by a method illustrated in Figure 1.

In a first step S1, the trained regression model f, training data Xraw and an empirical variance sig(f) determined by the regression model f when applying the training data as input data, are obtained, e.g., from a training apparatus after establishing the trained regression model. The trained regression model can already be in operation. Subsequently, see step S2, an uncertainty layer is generated in the trained regression model based on the training data, and the empirical variance. The trained regression model extended with the uncertainty layer is further called enhanced trained regression model F. Now measured sensor data X* are obtained as input data, see step S3, to the enhanced trained regression model F, which outputs, see step S4 not only a prediction by processing the input data in the trained regression model but also an uncertainty value of the prediction by processing the input data by a feature extractor model and subsequently by the uncertainty layer, wherein the feature extractor model comprises all but the last layers of the regression model.

The uncertainty layer is generated by splitting, see step S2a, the regression model into a linear model comprising a last layer of the regression model, and the feature extractor model. Then, latent representations are determined by applying the training data to the feature extractor model, see step S2b. Subsequently the uncertainty layer is generated by combining the latent representations with the empirical variance, see step S2c.

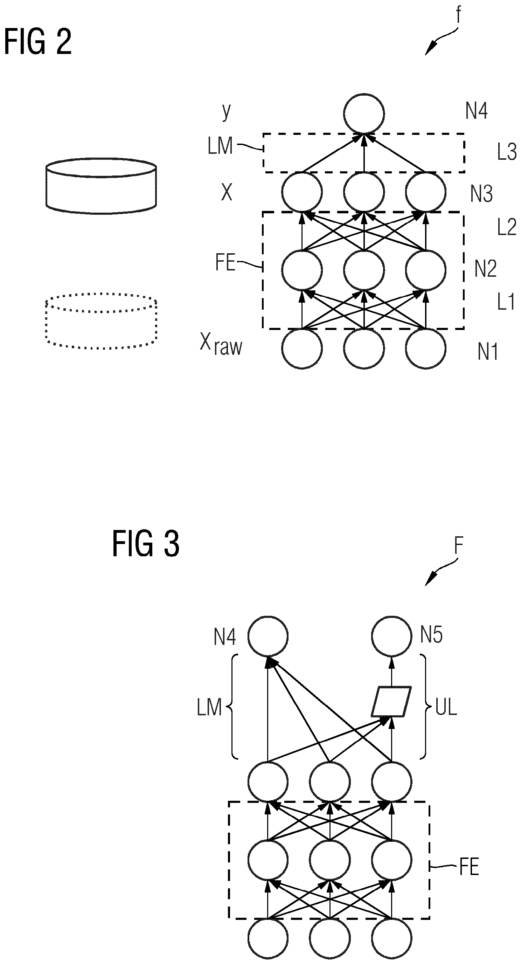

The splitting steps are illustrated by an example trained regression model f shown in Fig. 2. The obtained trained regression model f comprises input nodes N1, which represent the training data Xraw, more than one hidden layers, here as an example hidden layers L1,..,L3, interconnected by nodes N2 and N3 containing weights of the trained regression model f and an output node, here called prediction node N4 providing the prediction y. The trained regression model is split into two consecutive parts, the feature extractor FE consisting of all but the last layers L1, L2 and a linear model LM consisting of the last layer L3, responsible for the prediction. The feature extractor FE comprises a deep kernel of the trained regression model f. The expressions deep kernel and linear kernel are used as synonym throughout this document. Based on the training data Xraw a forward pass is performed to derive latent representations X, also known as abstract features, of the raw data Xraw. These latent representations X serve as direct input to the predictive linear model LM.

In practice, it might not be realistic to expect, e.g., a user, to provide and upload the entire dataset of training data Xraw used to train the regression model f. Fortunately, the research in scalable Gaussian Processes has shown that the training data Xraw can be well represented by a smaller subset of training data X* for the calculation of kernel matrices of the trained regression model f. The subset of training data can consist of either random samples or samples that are "trained" to represent the whole. Random samples are drawn uniformly from the training set. The "trained" subset of training data are obtained by performing a cluster analysis on the training set and provide the cluster centres as representations. The quality of the uncertainty quantification depends on the choice of this subset of training data, wherein collecting the random samples require less processing capacity then performing the cluster analysis to derive the cluster centres as subset of training data.

The kernel described herein is both deep and linear at the same time, but "deep" and "linear" describe the function from two completely different perspectives:

Why is it "deep"? It is attempted to quantify uncertainty in modern neural networks which tend to be deep in the sense of consisting of multiple layers. A kernel function is definded in the latent space that has been learned by the layers in a neural network. In other words, these layers map the raw input into a latent space where the predictive task becomes simpler. To this end, the neural network layers can be treated as part of the kernel function itself, that is, we call the kernel "deep".

The kernel is "linear" because the kernel function k(x, x') measures the "similarity" between two data points x and x', both of which are output of the neural network layers. There are many ways to define such similarity and in the scope of this invention, we only consider the definition of k(x, x')=<x, x'>, i.e., the inner product of both (represented) data points, which can be seen as unnormalized cosine similarity. Obviously, the kernel is bi-linear in both x and x'. In summa, if we have two raw input z and z', then the kernel that is both deep and linear is defined as:

$$k(g(z), g(z')) = \langle g(z), g(z') \rangle$$

It is linear because the inner product operation < ·, · > is bi-linear in both terms and g( ·) consists of multiple layers, which is deep (and typically non-linear).

Fig. 3 shows the enhanced trained regression model F. The enhanced trained regression model F is augmented with an additional uncertainty layer UL, producing an uncertainty node N5 which outputs a variance of the prediction, which is output at node N4. That is to say, the forward pass through this neural network generates two scalar outputs, a point estimate and its variance.

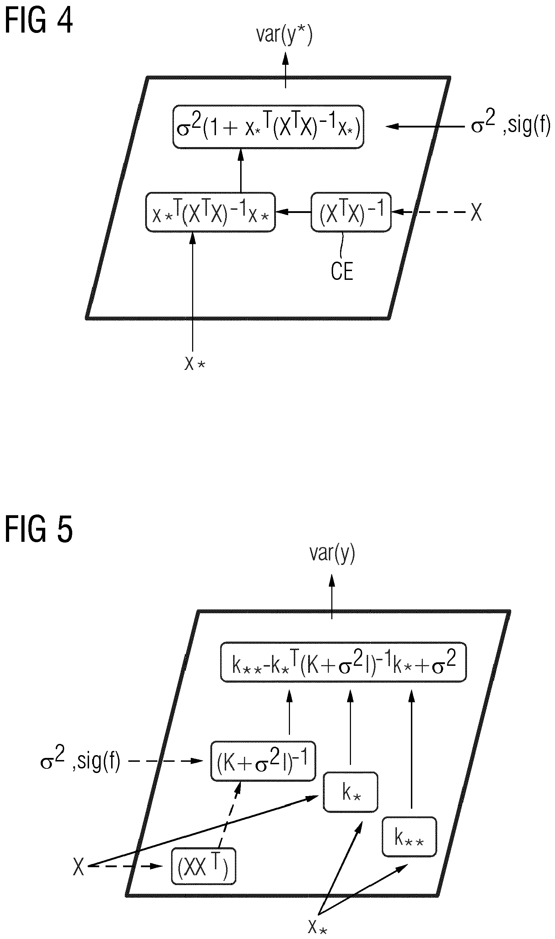

Fig. 4 shows a first embodiment of an implementation of the uncertainty layer UL. Here the latent representations X are combined with the empirical variance sig(f) according to an Ordinary Least Square Model (OLS).

Input data to the uncertainty layer UL are the training data Xraw or the subset of training data X*, the empirical variance sig(f), here denoted as $\sigma^2$, and sample X* for which we are supposed to perform the prediction. The term $(X^TX)^{-1}$, which is denoted as uncertainty core element CE and which is calculated from the latent representation X, need to be calculated only once upon initialization of the layer, marked with a dashed line, since the inverse may be expensive. This reduces processing capacity for calculating the uncertainty value. The output is the uncertainty value var(y) which is calculated according to

$$\mathrm{Var}(\mathbf{y_*}) = \sigma^2(1+ x_*^T(X^TX)^{-1}x_*)$$

From classical regression analysis, it is known that even a simplest Ordinary Least Square (OLS) solution to a regression problem provides not only point estimate, but also predictive variance which can be interpreted as uncertainty:

$$y_* \sim \mathcal{N}(x_*^T(X^TX)^{-1}X^Ty, \sigma^2(1+ x_*^T(X^TX)^{-1}x_*)) \qquad (1)$$

where X is a design matrix and y is a response respectively. $\sigma^2$ denotes the variance of the response and is estimated via its empirical value sig(f) measured in the training data X*. x* denotes a single test sample, $\mathcal{N}$ denotes a Normal distribution also known as a Gaussian distribution.

This conclusion does not transfer to more complex regression model architectures such as multilayer perceptron (MLP) or neural networks, since the OLS solution of a single weight vector

$$\beta=(X^TX)^{-1}X^Ty$$

does not exist. However, based on the common interpretation that all but the last layers in a neural network function as a constant feature extractor, it is proposed not to assume any uncertainty therein. Thus, it is possible to treat all previous layers, e.g., L1, L2 as constant and apply Eq. (1) to quantify the uncertainty only from the last layer L3, where X becomes the output of the previous layers L1, L2 as feature extractor FE.

It can be argued that this treatment is in fact similar to a workflow of classical regression analysis, where a data scientist is supposed to design the input matrix X manually via feature engineering. But once the linear regression has been fit, one cannot change the process of feature engineering anymore. In the case of deep neural networks, we just have an "automatic" feature engineering process that is trained jointly with the linear model LM.

Fig. 5 shows a second embodiment of an implementation of the uncertainty layer UL. The latent representations X are combined with the empirical variance as a Gaussian Process model with a linear kernel defined on the latent representations X.

This embodiment of the method is based on another appealing theoretical feature which lies in the fact that a linear regression neural network is approximately equivalent to a Gaussian Process model with a linear deep kernel that has been trained end-to-end. A linear deep kernel is a kernel function that calculates the distance between two samples in the kernel space via inner product, where the kernel space is created by a neural network:

$$k(x_{raw}, x'_{raw}) = <x, x'> \text{ with } x=\mathcal{N}\mathcal{N}(x_{raw}), x'=\mathcal{N}\mathcal{N}(x'_{raw}).$$

The prediction of a new sample x* by such a Gaussian Process model is

$$y_* \sim \mathcal{N}(k_*^T(K+\sigma^2I)^{-1}y, k_{**} - k_*^T(K+\sigma^2I)^{-1}k_*+ \sigma^2) \qquad (2)$$

where $k^{**}=k(x^*,x^*)=<x^*,x^*>$, $k^*=k(x^*,X)=<x^*,X>$, $K=k(X, X)$.

There is a detailed proof that the variance of this predictive distribution is approximately equivalent to that in Eq. (1) short of a multiplicative term, which converges to 1 as the number of training samples increase. The deep kernel Gaussian Process model has been shown to perform well on a large variety of tasks, and it does not have to interpret the previous layers as constant explicitly. Instead, the Gaussian Process interprets these layers as kernel parameters.

Similar to the first embodiment of the uncertainty layer depicted in Fig. 3, the second embodiment of the uncertainty takes as input the subset of training data X, the empirical variance $\sigma^2$, sig(f) and sample $x^*$ for which it is supposed to perform the prediction. In this embodiment the uncertainty core element CE is a term $(K+\sigma^2 I)^{-1}$, which need to be calculated only once upon initialization (marked with dashed lines) of the layer since the inverse may be expensive. At inference, however, kernel values $k^*$, $k^{**}$ still have to calculate between test sample $x^*$ and all samples in X. Therefore, this implementation is more expensive than shown in Fig. 3.

The uncertainty layer UL is generated, see also step S2c in Fig.1, by combining the latent representations X with the empirical variance $\sigma^2$, sig(f). This is performed by implementing equation (1) or equation (2) as additional layer, generating the additional output node N5, which we refer to as the uncertainty node, illustrated in Fig. 3. The implementation detail of the uncertainty node is first elaborated in python/tensorflow codes as follows:

```python
import tensorflow as tf

class Uncertainty Layer Eq1(tf.keras.layers.Layer):
  def _init_(self, X, sigma):
      super(Uncertainty_Layer_Eq1, self)._init_()
      self.sigma = sigma
      self.K inv = tf.Variable(
          initial_value=np.linalg.pinv(X.T.dot(X)),
          dtype='float32',
          trainable=False,
      )


  def call(self, inputs):
      return (tf.matmul(
        tf.matmul(inputs, self.K_inv), tf.transpose(inputs)
      ) + 1)*self.sigma

      class Uncertainty Layer Eq2(tf.keras.layers.Layer):
  def _init_(self, X, sigma):
      super(Uncertainty_Layer_Eq2, self)._init_()
      self.sigma = sigma
      self.X = tf.Variable(
          initial value=X,
          dtype='float32',
          trainable=False,
      )
      self.K_inv = tf.Variable(
          ini-
          tial_value=np.linaig.pinv(X.dot(X.T)+self.sigma*np.eye(X.shape[0])),
          dtype='float32',
          trainable=False,
      )

  def call(self, inputs):
      print(self.K_inv)
      k_xx = tf.matmul(inputs, tf.transpose(inputs))
      k xX = tf.matmul(self.X, tf.transpose(inputs))

      return k xx - tf.matmul(
          tf.matmul(tf.transpose(k-xX), self.K_inv),
          k_xX
      ) + self.sigma
```

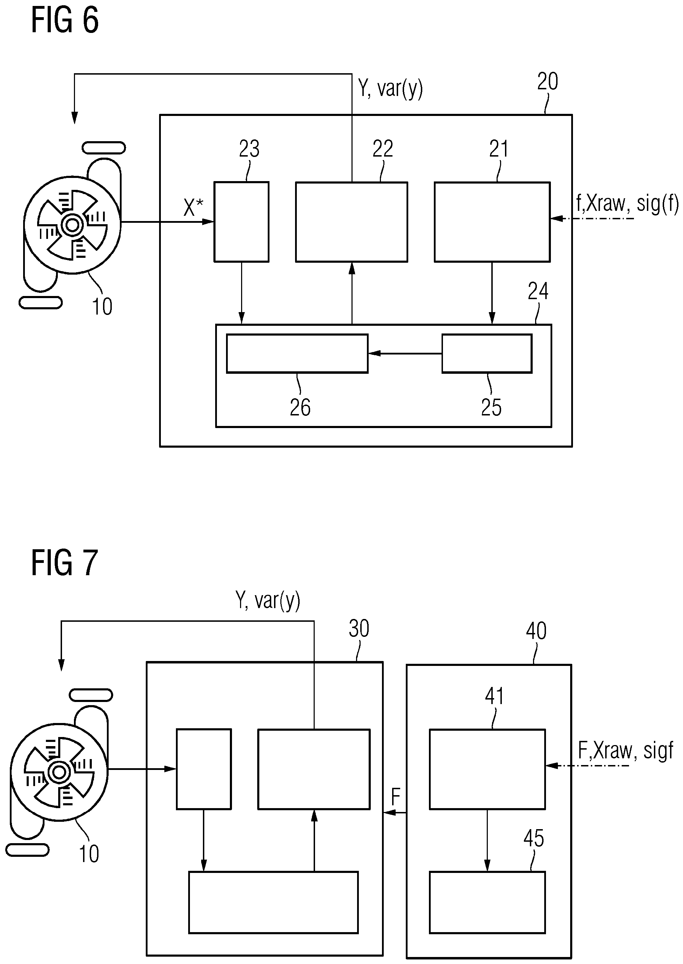

Fig. 6 illustrates an assistance apparatus 20 for automatically quantifying an uncertainty of a prediction provided by a trained regression model f for measured sensor data or image data $X^*$, comprising at least one processor, configured to perform the steps of the method, which are:

- obtaining S1 the trained regression model f, training data Xraw which were applied to train the regression model, and an empirical variance sig(f) determined by the regression model f applying the training data Xraw as input data,
- generating S2 an uncertainty layer in the trained regression model based on the training data, and the empirical variance,
- obtaining S3 the measured sensor data or image data as input data to an enhanced trained regression model F comprising the trained regression model and the uncertainty layer,
- outputting S4 a prediction by processing the input data in the trained regression model f and outputting an uncertainty value of the prediction by processing the input data by a feature extractor model and subsequently by the uncertainty layer UL, wherein the feature extractor model comprises all but the last layers of the regression model.

The at least one processor of the assistance apparatus 20 is implemented to form a model input interface 21, a control unit 24, a measured data input interface 23 and a prediction output interface 22. The model input interface 21 receives the trained regression model f, the training data Xraw and empirical variance sig(f). The control unit 24 comprises a layer generation unit 25 which generates the uncertainty layer UL according to the above-described method which forms together with the trained regression model an enhanced trained regression model F.

The trained regression model is applied for condition monitoring or quality control or image recognition in a manufacturing process or in autonomous driving or in healthcare support. Actual measured sensor data X*, which are measured by sensors applied to a machine 10 are received by the measured data input interface 23. The machine 10 is, e.g., a pump, turbine, casting machines, a manufacturing device, an autonomous vehicle or a healthcare system are depending on the above-mentioned application fields of the trained regression model. The control unit 24 comprises a model application unit 26 which comprises the enhanced trained regression model F. The measured sensor data X* is forwarded from the measured data input interface 23 to the model application unit 26 and used as input to the enhanced trained regression model F. A prediction y and an uncertainty value var(y) is output via the prediction output interface 22. Depending on prediction y and an uncertainty value var(y) settings of the machine 10 can be adapted. Low quality products detected depending on the prediction y and an uncertainty value var(y) can be sorted out. Manifold further actions can be derived from the prediction y and an uncertainty value var(y).

Fig. 7 shows an uncertainty modelling apparatus 40 comprising at least one processor, implementing a model input interface 41 and a layer generation unit 45 configured to perform the steps:

- obtaining S1 a trained regression model f, training data Xraw which were applied to train the trained regression model, and an empirical variance sig(f) determined by the regression model f applying the training data as input data,
- generating S2 an uncertainty layer in the trained regression model based on the training data, and the empirical variance, and
- outputting an enhanced trained regression model F which comprises the trained regression model and the uncertainty layer.

The layer generation unit 45 generates the uncertainty layer by the at least one processor by performing the steps splitting S2a the trained regression model into a linear model comprising a last layer of the regression model, and the feature extractor model, determining S2b latent representations by applying the training data to the feature extractor, and generating S2c the uncertainty layer by combining the latent representations X with the empirical variance sig(f).

The enhanced trained regression model F comprising the trained regression model f and the uncertainty layer UL is output to be used in an AI-system 30, which applies the enhanced trained regression model to measured sensor data received from the machine 10.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

## Claims

1. Computer-implemented method for automatically quantifying an uncertainty of a prediction provided by a trained regression model for measured sensor data or image data, comprising

    - obtaining (S1) the trained regression model (f), training data (Xraw) which were applied to train the regression model, and an empirical variance (sig(f)) determined by the regression model (f) applying the training data as input data,

- generating (S2) an uncertainty layer in the trained regression model based on the training data, and the empirical variance,
- obtaining (S3) the measured sensor data or image data as input data,
- outputting (S4) a prediction by processing the input data in the trained regression model and outputting (S5) an uncertainty value of the prediction by processing the input data by a feature extractor model and subsequently by the uncertainty layer, wherein the feature extractor model comprises all but the last layers of the regression model.

2. Method according to claim 1, wherein the uncertainty layer is generated comprising the steps

a. splitting (S2a) the regression model (f) into a linear model (LM) comprising a last layer (L3) of the regression model (f), and the feature extractor model (FE),
b. determining (S2b) latent representations (X) by applying the training data (Xraw) to the feature extractor (FE),
c. generating (S2c) the uncertainty layer by combining the latent representations with the empirical variance.

3. Method according to claim 2, wherein the latent representations are combined with the empirical variance according to an Ordinary Least Square Model.

4. Method according to claim 2, wherein the latent representations are combined with the empirical variance as a Gaussian Process model with a linear kernel defined on the latent representations.

5. Method according to any of the preceding claims, wherein the training data (Xraw) is a subset of training data (X*) comprising less training data than the entire training dataset used to train the regression model (f).

6. Method according to claim 5, wherein the subset of training data (X*) comprises uniformly distributed random samples of the training data (Xraw).

7. Method according to any of the preceding claims 1-5, wherein the subset of training data (X*) comprises data samples representing cluster centers of clusters resulting from a cluster analysis on the entire training dataset (Xraw).

8. Method according to any of the preceding claims, wherein the uncertainty value (var(y)) of the prediction is a variance of the prediction (y).

9. Method according to any of the preceding claims, wherein the uncertainty layer (UL) comprises an uncertainty core element (CE), which is calculated depending on the subset of training data (X*) during generation of the uncertainty layer (UL) and wherein the calculated uncertainty core element (CE) is reused during outputting the uncertainty value of the prediction for the measured sensor data or image data.

10. Method according to any of the preceding claims, wherein the trained regression model is applied for condition monitoring or quality control or image recognition in a manufacturing process or in autonomous driving or in healthcare support.

11. A computer program product directly loadable into the internal memory of a digital computer, comprising software code portions for performing the steps of any of claims 1-10 when said product is run on said digital computer.

12. Assistance apparatus for automatically quantifying an uncertainty of a prediction provided by a trained regression model for measured sensor data or image data, comprising at least one processor, configured to perform the steps:

- obtaining (S1) the trained regression model (f), training data (Xraw) which were applied to train the regression model, and an empirical variance (sig(f)) determined by the regression model (f) applying the training data as input data,
- generating (S2) an uncertainty layer in the trained regression model based on the training data, and the empirical variance,
- obtaining (S3) the measured sensor data or image data as input data,
- outputting (S4) a prediction by processing the input data in the trained regression model and outputting an uncertainty value of the prediction by processing the input data by a feature extractor model and subsequently by the uncertainty layer, wherein the feature extractor model comprises all but the last layers of the regression model.

**13.** Assistance apparatus according to claim 12,
wherein the assistance apparatus is installed and/or deployed on a cloud, an edge device or a device or system to which sensors are deployed providing the measured sensor data or image data.

**14.** Uncertainty modelling apparatus, comprising at least one processor, configured to perform the steps:

- obtaining (S1) a trained regression model (f), training data (Xraw) which were applied to train the trained regression model, and an empirical variance (sig(f)) determined by the regression model (f) applying the training data as input data,
- generating (S2) an uncertainty layer in the trained regression model based on the training data, and the empirical variance, and
- outputting an enhanced trained regression model which comprises the trained regression model and the uncertainty layer.

**15.** Uncertainty modelling apparatus according to claim 14, wherein the uncertainty layer is generated by the at least one processor by performing the steps

a. splitting (S2a) the trained regression model into a linear model comprising a last layer of the regression model, and the feature extractor model,
b. determining (S2b) latent representations by applying the training data to the feature extractor,
c. generating (S2c) the uncertainty layer by combining the latent representations with the empirical variance.

FIG 1

# FIG 2

# FIG 3

# FIG 4

$$\text{var}(y^*)$$

$$\sigma^2(1 + x_*^{T}(X^{T}X)^{-1}x_*) \quad \longleftarrow \quad \sigma^2, \text{sig}(f)$$

$$x_*^{T}(X^{T}X)^{-1}x_* \quad \longleftarrow \quad (X^{T}X)^{-1} \quad \longleftarrow \quad X$$

$$CE$$

$$X_*$$

# FIG 5

$$\text{var}(y)$$

$$k_{**} - k_*^{T}(K + \sigma^2 I)^{-1}k_* + \sigma^2$$

$$\sigma^2, \text{sig}(f) \quad \longrightarrow \quad (K + \sigma^2 I)^{-1}$$

$$k_*$$

$$k_{**}$$

$$X \quad \longrightarrow \quad (XX^{T})$$

$$X_*$$

## FIG 6

Y, var(y)

20

23  22  21

X*

f,Xraw, sig(f)

24

26  25

## FIG 7

Y, var(y)

30  40

41

10  F

F,Xraw, sigf

45

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/410364 A1 (WILLERS OLIVER [DE] ET AL) 31 December 2020 (2020-12-31)<br>* paragraphs [0005], [0067]; figures 1-3 *<br>* paragraph [0092] – paragraph [0099] *<br>----- | 1-15 | INV.<br>G06N3/04<br>G06N3/08 |

TECHNICAL FIELDS
SEARCHED      (IPC)

G06N

The present search report has been drawn up for all claims

| Place of search | Date of completion of the search | Examiner |
|---|---|---|
| The Hague | 23 August 2022 | Falco, Gabriele |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 .........................................................................

& : member of the same patent family, corresponding
    document

EPO FORM 1503 03.82 (P04C01)

**EP 4 235 507 A1**

## ANNEX TO THE EUROPEAN SEARCH REPORT
## ON EUROPEAN PATENT APPLICATION NO.

EP 22 15 8714

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2022

| Patent document cited in search report | | Publication date | Patent family member(s) | | Publication date |
|---|---|---|---|---|---|
| US 2020410364 | A1 | 31-12-2020 | CN | 112149821 A | 29-12-2020 |
| | | | EP | 3757895 A1 | 30-12-2020 |
| | | | KR | 20210002018 A | 06-01-2021 |
| | | | US | 2020410364 A1 | 31-12-2020 |

EPO FORM P0459

For more details about this annex : see Official Journal of the European Patent Office, No. 12/82